# EUROPÄISCHE PATENTANMELDUNG

(11) **EP 3 705 605 A1**
(43) Veröffentlichungstag der Anmeldung: **09.09.2020**
(21) Anmeldenummer: 19160806.6
(22) Anmeldetag: 05.03.2019
(51) Int. Cl.: C25B 15/08, B01D 53/14

(54) **ABSORPTIONSMITTEL, VORRICHTUNG UND VERFAHREN ZUM GEWINNEN VON KOHLENSTOFFDIOXID UND WASSER AUS LUFT**

(71) Anmelder: Siemens Aktiengesellschaft, 80333 München (DE)
(72) Erfinder: Hanebuth, Marc, 90482 Nürnberg (DE); Kammerer, Susanne, 91052 Erlangen (DE); Ungerer, Markus, 91083 Baiersdorf (DE)

(57) **Zusammenfassung**

Die Erfindung betrifft ein Absorptionsmittel, eine Vorrichtung und ein Verfahren zum Gewinnen von Wasser und Kohlenstoffdioxid aus Luft. Das Absorptionsmittel umfasst zu wenigstens einem Massenanteil von 20 % Salze, wobei der Kationenstoffmengenanteil der Salze zu wenigstens 90 % Alkali- und/oder Erdalkalimetallionen umfasst und der Anionenstoffmengenanteil der Salze zu wenigstens 80 % Halogenide umfasst. Der pH-Wert des Absorptionsmittels beträgt wenigstens 10,2. Mittels des Absorptionsmittels wird aus Luft Wasser und Kohlenstoffdioxid in einer Absorbereinheit absorbiert. Das Wasser und das Kohlenstoffdioxid werden anschließend in Abtrennvorrichtungen gewonnen.

## Beschreibung

Die Erfindung betrifft ein Absorptionsmittel, eine Vorrichtung und ein Verfahren zum Gewinnen von Kohlenstoffdioxid und Wasser aus Luft.

Die Nachfrage nach Strom schwankt im tagezeitlichen Verlauf stark. Auch die Stromerzeugung schwankt mit zunehmendem Anteil an Strom aus erneuerbaren Energien während des Tagesverlaufs. Um ein Überangebot an Strom in Zeiten mit viel Sonne und starkem Wind bei niedriger Nachfrage nach Strom ausgleichen zu können, benötigt man regelbare Kraftwerke oder Speicher, um diese Energie zu speichern.

Eine der derzeitig angedachten Lösungen ist das Umwandeln von elektrischer Energie in Wertprodukte, die insbesondere als Plattformchemikalien, insbesondere Ethen, Methan, Ethan, oder Synthesegas, welches Kohlenstoffmonoxid und Wasserstoff umfasst, dienen können. Ebenfalls angedachte Wertstoffe sind flüssige Kohlenwasserstoffe, die mit Hilfe von regenerativen Energien erzeugt werden. Eine mögliche Technik zur Umwandlung der elektrischen Energie in Wertprodukte stellt die Elektrolyse dar.

Die Elektrolyse von Wasser zu Wasserstoff und Sauerstoff stellt eine im Stand der Technik bekannte Methode dar. Aber auch die Elektrolyse von Kohlenstoffdioxid zu Wertstoffen, insbesondere zu Kohlenstoffmonoxid wird seit einigen Jahren erforscht und es gibt Bemühungen, ein elektrochemisches System zu entwickeln, das eine Kohlenstoffdioxidmenge entsprechend des wirtschaftlichen Interesses reduzieren kann. Aktuell werden ca. 80 % des weltweiten Energiebedarfs durch die Verbrennung von fossilen Brennstoffen gedeckt, deren Verbrennungsprozesse eine weltweite Emission von etwa 34000 Millionen Tonnen Kohlenstoffdioxid in die Atmosphäre pro Jahr verursacht. Kohlenstoffdioxid gehört zu den sogenannten Treibhausgasen, deren negative Auswirkungen auf die Atmosphäre und das Klima diskutiert werden. Eine Verwertung dieses Kohlenstoffdioxids ist daher wünschenswert.

Das wirtschaftliche und effiziente Betreiben eines Kohlenstoffdioxid-Elektrolyseurs, um insbesondere Methanol herzustellen ist möglich, wenn ein Überangebot an Strom herrscht, eine Kohlenstoffquelle vorhanden ist und eine Wasserstoffquelle vorhanden ist. Nachteilig aber sind selten alle drei Voraussetzungen an einem Ort erfüllt, was das effiziente und wirtschaftliche Betreiben eines Elektrolyseurs an unterschiedlichen örtlichen Beschaffenheiten einschränkt.

Es ist daher Aufgabe der vorliegenden Erfindung ein Absorptionsmittel, eine Vorrichtung und ein Verfahren anzugeben, welches es ermöglicht, Edukte, insbesondere für eine Elektrolyse, effizient und wirtschaftlich bereitzustellen.

Die Aufgabe wird mit einer Absorptionsmittel gemäß Anspruch 1, einer Vorrichtung gemäß Anspruch 7 und einem Verfahren gemäß Anspruch 8 gelöst.

Das erfindungsgemäße Absorptionsmittel zum Gewinnen von Wasser und Kohlenstoffdioxid aus Luft umfasst zu wenigstens einem Massenanteil von 20 % Salze. Der entsprechende Kationenstoffmengenanteil der Salze umfasst wenigstens 90 % Alkali und/oder Erdalkalimetallionen. Der Anionenstoffmengenanteil der Salze umfasst wenigstens 80 % Halogenide. Der pH-Wert des Absorptionsmittels beträgt wenigstens 10,2.

Eine erfindungsgemäße Vorrichtung zum Gewinnen von Kohlenstoffdioxid und Wasser aus Luft umfasst eine Absorbereinheit mit einem Absorptionsmittel. Das Absorptionsmittel umfasst wenigstens ein Massenanteil von 20 % Salze. Der Stoffmengenanteil der Kationen dieser Salze umfasst zu wenigstens 90 % Alkali und/oder Erdalkalimetallionen. Der Stoffmengenanteil der Anionen umfasst zu wenigstens 80 % Halogenide. Der pH-Wert des Absorptionsmittels beträgt wenigstens 10,2. Die Vorrichtung umfasst weiterhin eine erste Abtrennvorrichtung zum Gewinnen von Wasser aus dem Absorptionsmittel. Sie umfasst weiterhin eine zweite Abtrennvorrichtung zum Gewinnen von Kohlenstoffdioxid aus dem Absorptionsmittel.

Ein erfindungsgemäßes Verfahren zum Gewinnen von Wasser und Kohlenstoffdioxid umfasst mehrere Schritte. Zunächst erfolgt das Bereitstellen einer Absorbereinheit mit einem Absorptionsmittel. Das Absorptionsmittel umfasst einen Massenanteil von wenigstens 20 % Salze. Der Stoffmengenanteil der Kationen dieser Salze umfasst wenigstens 90 % Alkali und/oder Erdalkalimetallionen. Der Stoffmengenanteil der Anionen umfasst wenigstens 80 % Halogenide. Ein pH-Wert des Absorptionsmittels beträgt dabei wenigstens 10,2. In die Absorbereinheit wird Luft in das Absorptionsmittel geführt. In das Absorptionsmittel absorbieren Kohlenstoffdioxid und Wasser aus der Luft. Das mit Wasser und Kohlenstoffdioxid beladene Absorptionsmittel wird in eine erste Abtrennvorrichtung geführt. In der ersten Abtrennvorrichtung wird Wasser aus dem Absorptionsmittel gewonnen. Parallel oder danach wird das beladene Absorptionsmittel in eine zweite Abtrennvorrichtung geführt. In der zweiten Abtrennvorrichtung wird Kohlenstoffdioxid aus dem Absorptionsmittel gewonnen. Das regenerierte Absorptionsmittel wird wenigstens teilweise zurück in die Absorbereinheit geführt.

In dem Absorptionsmittel absorbieren erfindungsgemäß sowohl Kohlenstoffdioxid als auch Wasser in so großer Menge, dass diese industriell genutzt werden können. Als Wasser-Quelle und als Kohlenstoffdioxid-Quelle kann mit Hilfe der vorliegenden Erfindung vorteilhaft energieeffizient die Umgebungsluft erschlossen werden. Insbesondere in heißen, tropischen Regionen ist ausreichend Wasser in der Luft, um dieses zu gewinnen. In diesen Regionen ist es insbesondere auch möglich, Strom mittels erneuerbarer Energien, insbesondere mittels Photovoltaikanlagen aus Sonnenenergie in industriellem Maßstab über das gesamte Jahr hinweg zu produzieren. Somit kann eine effiziente Kohlenstoffdioxid-Elektrolyse an Orten mit einer großen Menge an Überschussenergie, insbesondere an sonnenreichen warmen Orten betrieben werden. Dabei dient das Wasser als Wasserstoffquelle.

Die Menge der Salze in dem Absorptionsmittel sowie die Anteile der Kationen und Anionen beeinflussen den Dampfdruck der Lösung. Der Dampfdruck des erfindungsgemäßen Absorptionsmittels wird mittels der Salze so weit erniedrigt, dass das Absorptionsmittel selbst nur in geringen Mengen, insbesondere auch bei hohen Temperaturen, insbesondere bis zu 45 °C, nicht übermäßig verdunstet. Dies ist insbesondere vorteilhaft, da eine große Menge an Absorptionsmittel zum Absorbieren einer ausreichend großen Kohlenstoffdioxidmenge aus der Luft, welche einen Kohlenstoffdioxidgehalt von im Wesentlichen 400 ppm aufweist, nötig ist. Ein niedriger Dampfdruck vermindert also Verluste und vermeidet daher einen zusätzlichen Absorptionsmittelbedarf und hat somit vorteilhaft eine hohe Effizienz zur Folge. Der Massenanteil der Salze im Absorptionsmittel beträgt wenigstens 20 %. In einer bevorzugten Ausgestaltung beträgt der Massenanteil der Salze 30 %. Besonders bevorzugt ist ein Anteil der Salze in dem Absorptionsmittel von wenigstens 35 %. Der angegebene Anteil der Salze spiegelt die Salze wieder, die zum Erniedrigen des Dampfdrucks eingesetzt werden. Der Gesamtanteil der Kationen und Anionen kann, insbesondere durch Einstellen des pH-Wertes, höher sein.

Der pH-Wert des erfindungsgemäßen Absorptionsmittels liegt bei wenigstens 10,2. Bei diesem pH-Wert liegen Carbonate in dem Absorptionsmittel vor, was einer chemischen Absorption von Kohlenstoffdioxid entspricht. Somit kann vorteilhaft eine besonders große Menge an Kohlendioxid absorbiert werden. Vorteilhaft wird eine Lauge, insbesondere ein Hydroxid, zum Einstellen des pH-Wertes verwendet, welche ein anderes Kation als das eingesetzte Salz aufweist.

In einer vorteilhaften Ausgestaltung und Weiterbildung der Erfindung weist das Absorptionsmittel einen Dampfdruck auf, der bei einer Temperatur in einem Temperaturbereich von 0 °C bis 60 °C weniger als die Hälfte des Dampfdrucks von Wasser bei derselben Temperatur beträgt. Vorteilhaft ist der Dampfdruck des Absorptionsmittels dann so niedrig, dass selbst in sehr heißen Regionen während der Absorption nur wenige Stunden im Jahr auftreten, die zu einer übermäßigen Verdunstung von Wasser führen würden. Vorteilhaft ist das Verfahren somit sehr effizient, da kaum Absorptionsmittel an die Umgebung verloren geht.

In einer weiteren vorteilhaften Ausgestaltung und Weiterbildung der Erfindung beträgt der pH-Wert des Absorptionsmittels wenigstens 11. Bei pH-Werten oberhalb von 11 liegen die Carbonate im Absorptionsmittel dissoziiert vor. Dadurch kann eine große Menge an Kohlenstoffdioxid absorbieren. In anderen Worten steigt die Kapazität des Absorptionsmittels vorteilhaft.

In einer weiteren vorteilhaften Ausgestaltung und Weiterbildung der Erfindung umfasst der Kationenstoffmengenanteil im Absorptionsmittel wenigstens 50 % Lithiumkationen. Insbesondere Lithium- Halogenide weisen einen niedrigen Dampfdruck auf. Somit ist der Verlust des Absorptionsmittels äußerst gering, sodass Wasser und Kohlenstoffdioxid sehr effizient absorbiert werden kann.

In einer weiteren vorteilhaften Ausgestaltung und Weiterbildung der Erfindung weist der Anionenstoffmengenanteil im Absorptionsmittel Chloridionen und/oder Bromidionen auf. Lithiumbromid weist eine hohe Löslichkeit in Wasser auf. Somit ist es ein effizientes Absorptionsmittel. Lithiumchlorid weist zwar eine niedrigere Löslichkeit auf, kann aus Kostengründen aber ebenfalls vorteilhaft als Salz eingesetzt werden.

In einer weiteren vorteilhaften Ausgestaltung und Weiterbildung der Erfindung weist das Absorptionsmittel Hydroxid, Hydrogencarbonat und/oder Carbonat in einem Massenanteil von 0, 5 % bis 20 % auf. Diese Menge an Hydroxid, Hydrogencarbonat und/oder Carbonat hat einen pH-Wert des Absorptionsmittels von wenigstens 10,2 zur Folge. Vorteilhaft kann somit darin ausreichend Kohlenstoffdioxid absorbieren.

In einer weiteren vorteilhaften Ausgestaltung und Weiterbildung der Erfindung wird die Luft mittels eines Gebläses in die Absorbereinheit geführt. Der Druckabfall der Absorbereinheit, welcher durch das Gebläse überwunden wird, liegt dabei unterhalb von 50 mbar, insbesondere weniger als 10 mbar. Vorteilhaft wird durch den Einsatz eines Gebläses der Volumenstrom der Luft durch das Absorptionsmittel erhöht. Somit kann die Effizienz der Absorptionseinheit vorteilhaft erhöht werden, da ein zusätzliche Kompression der Luftmassen vermieden werden kann.

In einer weiteren vorteilhaften Ausgestaltung und Weiterbildung der Erfindung wird als eine erste Abtrennvorrichtung eine Verdunstungseinheit oder eine Membraneinheit verwendet. Insbesondere kann das Wasser aus dem Absorptionsmittel in einer Verdunstungseinrichtung bei Temperaturen unterhalb von 100° regeneriert werden. Dabei wird das Absorptionsmittel im Gegenstrom zu einem Gas geführt, wobei das Gas das Wasser aus dem Absorptionsmittel aufnimmt. Das Wasser kann anschließend aus dem Gas, insbesondere mittels Kondensation, gewonnen werden. Das Wasser lässt sich alternativ oder zusätzlich mechanisch aus dem Absorptionsmittel, insbesondere mittels eines Umkehrosmose-Prozesses, gewinnen. Vorteilhaft wird das Absorptionsmittel so regeneriert und kann wenigstens teilweise wiederverwendet werden. Weiterhin kann das gewonnene Wasser in den CO₂-Elektrolseur geführt werden. Dies ist insbesondere dann sinnvoll, wenn in dem CO2-Elektrolyseur flüssige Kohlenwasserstoffe, insbesondere Methanol hergestellt wird.

In einer weiteren vorteilhaften Ausgestaltung und Weiterbildung der Erfindung wird als eine zweite Abtrennvorrichtung eine Membraneinheit eingesetzt. Die Membraneinheit umfasst insbesondere eine ionenselektive bipolare Membran. In diesem Fall wird vorteilhaft für die Absorption von Kohlenstoffdioxid aus dem Absorptionsmittel Natriumhydroxid oder Kaliumhydroxid eingesetzt.

In einer weiteren vorteilhaften Ausgestaltung und Weiterbildung der Erfindung erfolgt in der zweiten Abtrennvorrichtung ein Ausfällen von Carbonat und eine thermische Zersetzung des Carbonat zum Abtrennen des Kohlenstoffdioxids aus dem Absorptionsmittel. Für das Ausfällen des Carbonats kann zweckmäßigerweise die Lauge Calciumhydroxid (Ca(OH)₂) eingesetzt werden, welche zu einem Ausfällen von Calciumcarbonat führt. Bei der thermischen Zersetzung des ausgefällten Carbonats bleibt Branntkalk, Calciumoxid, zurück, aus welchem unter Zugabe von Wasser wieder neues Calciumhydroxid erzeugt wird. Da es sich hier um einen geschlossenen Kreislauf handelt, ist diese Variante besonders effizient.

Sowohl Laugen als auch Lithiumsalze werden im Laufe des Verfahrens wiedergewonnen. Vorteilhaft ist das gesamte Verfahren somit Ressourcen schonend und kostengünstig. Die Regeneration des Absorptionsmittels sollte möglichst vollständig und ohne Verluste stattfinden. Insbesondere muss während der Absorption vermieden werden, Tröpfchen aus dem Absorptionsmittel mitzureißen.

Weitere Merkmale, Eigenschaften und Vorteile der vorliegenden Erfindung ergeben sich aus der nachfolgenden Beschreibung unter Bezugnahme auf die beiliegenden Figuren. Darin zeigen schematisch:
- Figur 1: ein Verfahrensfließbild der Gewinnung von Kohlenstoffdioxid und Wasser aus Luft und anschließender Wertstoffproduktion;
- Figur 2: ein Verfahrensfließbild einer alternativen Ausführung der Trennvorrichtung;
- Figur 3: eine Absorbereinheit zum Absorbieren von Kohlenstoffdioxid und Wasser aus Luft;
- Figur 4: eine Wassergewinnungseinheit mit einer Verdunstereinheit und einem Kondensator;
- Figur 5: eine erste Kohlenstoffdioxidgewinnungseinheit;
- Figur 6: eine zweite Kohlenstoffdioxidgewinnungseinheit.

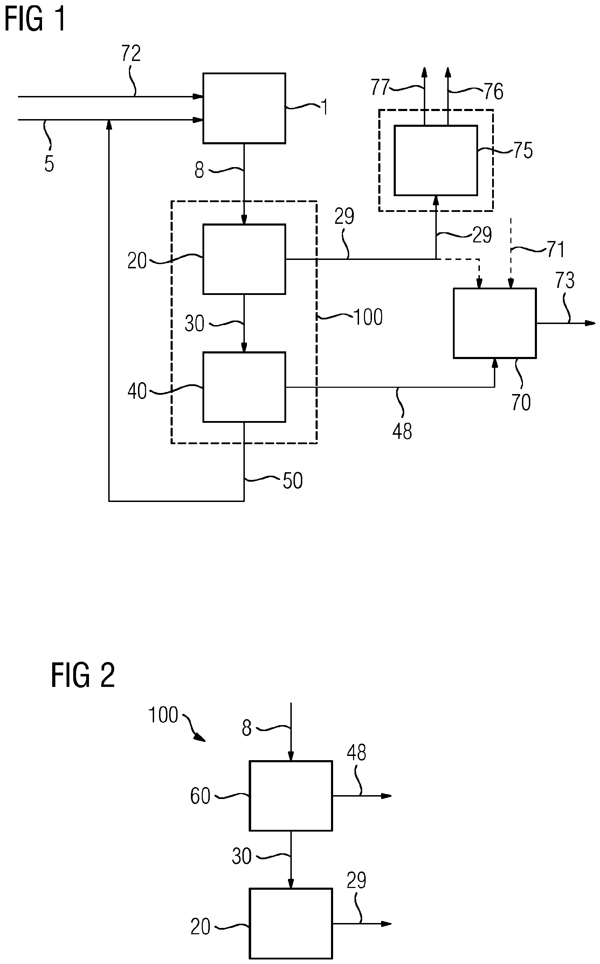

Figur 1 zeigt ein Verfahrensfließbild zur Gewinnung von Wasserstoff und Kohlenstoffdioxid aus Luft und anschließender Wertstoffproduktion. Zunächst wird Luft 72 in eine Absorbereinheit 1 geführt. In der Absorbereinheit 1 wird sowohl Wasser als auch Kohlenstoffdioxid aus der Luft abgetrennt und in einem Absorptionsmittel 5 absorbiert. Das beladene Absorptionsmittel 8 wird anschließend in eine Gewinnungseinheit 100 geführt. In einem ersten Beispiel wird das beladene Absorptionsmittel 8 zunächst in eine Wassergewinnungseinheit 20 geführt. Dort wird das Wasser 29 aus dem beladenen Absorptionsmittel 8 entfernt. In anderen Worten wird das beladene Absorptionsmittel 8 aufkonzentriert.

Das teilregenerierte Absorptionsmittel 30 verlässt die Wassergewinnungseinheit 20 und wird in eine erste Kohlenstoffdioxidgewinnungseinheit 40 geführt. Es ist ebenso denkbar anstelle der ersten Kohlenstoffdioxidgewinnungseinheit 40 die zweite Kohlenstoffdioxidgewinnungseinheit 60 zu verwenden. In der ersten Kohlenstoffdioxidgewinnungseinheit 40 wird das Absorptionsmittel regeneriert und Kohlenstoffdioxid 48 gewonnen.

Der Kohlenstoffdioxid-Elektrolyseur 70 und der Wasser-Elektrolyseur 75 werden mit elektrischer Energie 71 versorgt. Besonders bevorzugt wird diese elektrische Energie mittels erneuerbarer Energien, insbesondere mittels Windenergie und/oder Sonnenenergie, erzeugt. In dem Kohlenstoffdioxid-Elektrolyseur 70 wird dann ein Wertstoff 73 hergestellt.

Dieser Wertstoff kann Kohlenstoffmonoxid oder Kohlenwasserstoffe, insbesondere flüssige Kohlenwasserstoffe umfassen. Die Edukte Wasser 29 und Kohlenstoffdioxid 48 können dann, je nach Art des Wertprodukts, auf Elektrolyseure verteilt werden.

In Figur 1 sind zwei möglich Szenarien abgebildet: Wird in dem Kohlenstoffdioxid-Elektrolyseur 70 ein flüssiger Kohlenwasserstoff hergestellt, so wird kontinuierlich Wasser 29 und Kohlenstoffdioxid in den Kohlenstoffdioxid-Elektrolyseur 70 geführt. Es ist optional möglich zusätzlich Wasser 29 in einen Wasser-Elektrolyseur 75 zu führen, um Wasserstoff und Sauerstoff herzustellen.

Für den Fall das der Kohlendioxid-Elektrolyseur 70 Kohlenmonoxid produziert, wird der Kohlenstoffdioxid 48 in den Kohlenstoffdioxid-Elektrolyseur 70 geführt. Das Wasser 29 wird dann in einen Wasser-Elektrolyseur 75 geführt. Dort wird das Wasser 29 dann zu Wasserstoff 76 und Sauerstoff 77 zerlegt. Das Wasser 29 kann auch teilweise aus dem Prozess herausgeführt werden. Der Wasserstoff 76 aus dem Wasser-Elektrolyseur 75 und das Kohlenstoffmonoxid aus dem Kohlenstoffdioxid-Elektrolyseur 70 können dann vorteilhaft zu Synthesegas gemischt werden.

In einer alternativen Ausführung der Gewinnungseinheit 100, gezeigt in Figur 2, wird aus dem beladenen Absorptionsmittel 8 zunächst in einer zweiten Kohlenstoffdioxidgewinnungseinheit 60 das Kohlenstoffdioxid 48 aus dem beladenen Absorptionsmittel 8 gewonnen. Anschließend wird das teilregenerierte Absorptionsmittel 30 in eine Wassergewinnungseinheit 20 geführt. Dort wird das Wasser 29 gewonnen. Das Absorptionsmittel 30 wird vollständig regeneriert und als regeneriertes Absorptionsmittel 50 zurück in die Absorbereinheit 1 geführt.

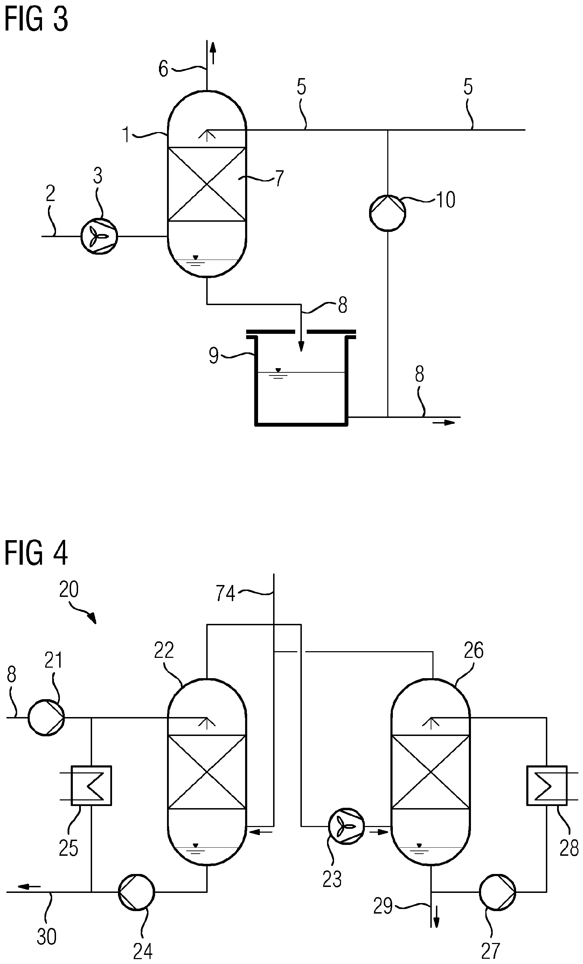

Figur 3 zeigt eine Absorbereinheit 1. In der Absorbereinheit 1 ist eine Schüttung 7 angeordnet. Diese Schüttung 7 dient einer Erhöhung der Oberfläche bei möglichst geringem Strömungswiderstand. Alternativ ist ebenso denkbar, dass in der Absorbereinheit ein Fallfilm ausgebildet wird. In die Absorbereinheit 1 wird Luft über die Zuluftleitung 2 geführt. Der Luftstrom wird mittels eines ersten Gebläses 3 vorteilhaft erhöht. Im Gegenstrom zur Luft wird ein Absorptionsmittel 5 geführt. Dieses wird vorteilhaft gleichmäßig über die Absorbereinheit, in anderen Worten über die Schüttung, verteilt. Somit steht für den Stoffaustausch zwischen der Luft und dem Absorptionsmittel 5 eine möglichst große Oberfläche zur Verfügung.

Das Absorptionsmittel 5 weist dabei einen Massenanteil von wenigstens 20 % Salzen auf. Der Kationenstoffmengenanteil der Salze umfasst zu wenigstens 90 % Alkali- und/oder Erdalkalimetallionen. Der Anionenstoffmengenanteil umfasst wenigstens 80 % Halogenide. Der pH-Wert des Absorptionsmittels 5 beträgt wenigstens 10,2. Insbesondere vorteilhaft ist der Einsatz von Lithium-Halogeniden. In diesem Beispiel wird Lithiumbromid als Salz in dem Absorptionsmittel verwendet. Lithiumbromid weist eine hohe Löslichkeit für Wasser und Luft auf. Weiterhin weist Lithiumbromid einen niedrigen Dampfdruck im Vergleich zu Wasser auf. Somit verdampft vorteilhaft das Absorptionsmittel kaum. Alternativ kann ebenso Lithiumchlorid als Salz eingesetzt werden. Je nach vorliegenden äußeren Bedingungen, also insbesondere in Abhängigkeit der Umgebungstemperatur, kann Lithiumchlorid vorteilhaft kostengünstiger sein.

Das Absorptionsmittel 5 weist einen pH-Wert von wenigstens 10,2 auf. Damit die maximale Löslichkeit des Salzes, in diesem Beispiel Lithiumbromid, nicht negativ beeinflusst wird, sollte eine Lauge verwendet werden, welche nicht dasselbe Kation aufweist wie das Salz. In diesem Fall sollte die Lauge also kein Lithium-Ion enthalten. Besonders bevorzugt werden Laugen umfassend ein Hydroxid eingesetzt.

Das beladene Absorptionsmittel 8 wird in diesem Beispiel in einen Vorratsbehälter 9 geführt. Von hier aus kann es teilweise direkt über eine erste Pumpe in die Absorptionseinheit 1 zurückgeführt werden. Ein weiterer Teil wird, wie im Verfahrensfließbild aus Figur 1 bereits dargelegt, in eine Gewinneinheit 100 geführt.

Figur 4 zeigt eine Wassergewinnungseinheit 20. Das beladene Absorptionsmittel 8 wird in eine Verdunstereinheit 22 geführt. In dieser Verdunstereinheit 22 wird das beladene Absorptionsmittel 8 im Gegenstrom zu einem Trägergas 74 geführt. Dieses Trägergas 74 kann insbesondere Stickstoff oder Luft sein. Das Trägergas 74, in welchem der Wasserpartialdruck unterhalb des Wasserdampfdruckes des salzhaltigen Absorptionsmittels 5 liegt, nimmt das verdunstete Wasser auf. Das beladene Trägergas wird anschließend in einen Kondensator 26 geführt. Der Stoffstrom des beladenen Trägergases wird mittels eines zweiten Gebläses 23 aufgebracht. Die Temperatur in dem Kondensator wird mittels einer Kühleinrichtung 28 erniedrigt, sodass das Wasser aus dem Trägergas kondensiert. Das kondensierte Wasser wird durch die Kühleinrichtung 28 mittels einer vierten Pumpe 27 wenigstens teilweise im Kreis gepumpt. Das gereinigte Trägergas 74 kann insbesondere wieder in die Verdunstereinheit 22 zurückgeführt werden. Das kondensierte Wasser 29 kann dann in eine Kohlenstoffdioxid-Elektrolyseur 70 oder alternativ oder zusätzlich in einen Wasser-Elektrolyseur 75 geführt werden.

Alternativ zu dem hier gezeigten Verdunstungsverfahren kann das beladene Absorptionsmittel 8 auch mechanisch, insbesondere mit Membranprozessen wie Umkehrosmose, regeneriert werden und das Wasser somit gewonnen werden.

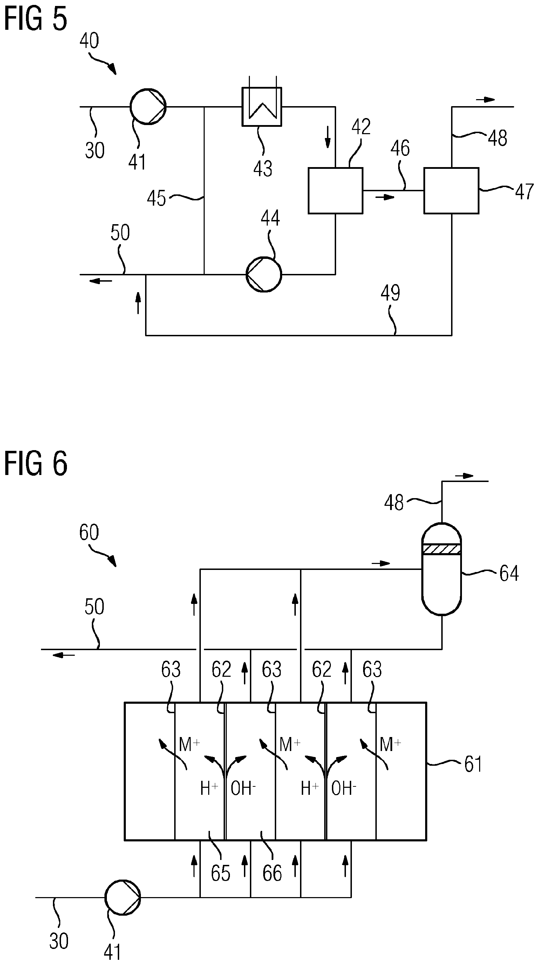

Figur 5 zeigt eine erste Kohlenstoffdioxidgewinnungseinheit 40. Die erste Kohlenstoffdioxidgewinnungseinheit 40 umfasst eine Kristallisationseinheit 42 und eine Kalziniereinheit 47. Das teilbeladene Absorptionsmittel 30 wird zunächst über eine fünfte Pumpe 41 und eine zweite Heizvorrichtung 43 in eine Kristallisationseinheit 42 gepumpt. In der Kristallisationseinheit 42 erfolgt das Ausfällen von Carbonat. Anschließend wird das Carbonat in einer Kalziniereinheit 47 thermisch zersetzt. Somit wird Kohlenstoffdioxid gewonnen. Das Kohlenstoffdioxid 48 verlässt die Kalziniereinheit 47 und kann insbesondere in einen Kohlenstoffdioxid-Elektrolyseur 70 geführt werden. Die an Carbonat abgereicherte Lösung kann aus der Kristallisationseinheit 42 herausgeführt werden und mittels einer Pumpe 44 im Kreis geführt werden. Diese Lösung kann aber auch zusammen mit den Rückständen aus der Kalziniereinheit 47 als regeneriertes Absorptionsmittel 50 zurück in die Absorbereinheit 1 geführt werden. Für den Fall, dass dieses Verfahren als Aufbereitungsverfahren für das Kohlenstoffdioxid verwendet wird, ist es besonders vorteilhaft als Lauge zum Einstellen des pH-Wertes Calciumhydroxid (Ca(OH)₂) zu verwenden. Diese Lauge kann aus dem bei der Kalzinierung anfallenden Rückstand durch Zugabe von Wasser erzeugt werden. Die Verwendung von Calcium als Kation hat an dieser Stelle den Vorteil, dass besonders bei hohen Temperaturen eine geringe Löslichkeit des Carbonats in Wasser vorliegt, welches somit vorteilhaft ausgefällt werden kann.

Figur 6 zeigt eine zweite Kohlenstoffdioxidgewinnungseinheit 60. Die zweite Kohlenstoffdioxidgewinnungseinheit 60 umfasst eine Elektrodialyseeinheit 61. In die Elektrodialyseeinheit 61 wird mittels einer fünften Pumpe 41 das teilbeladene Absorptionsmittel 30 geführt. Die Elektrodialyseeinheit 61 umfasst Kationen selektive Membranen 62 und bipolare Membranen 63. Die Kationen selektive Membranen 62 und die bipolaren Membranen 63 sind abwechselnd in der Elektrodialyseeinheit 61 angeordnet. Zwischen den Membranen bilden sich erste Kammern 65 und zweite Kammern 66 aus. In den zweiten Kammern 66 wird das teilbeladene Absorptionsmittel 30 von Kohlenstoffdioxid abgereichert und als regeneriertes Absorptionsmittel 50 aus der Elektrodialyse 61 herausgeführt. Das Kohlenstoffdioxid wird in den ersten Kammern 65 aufkonzentriert und anschließend in einer Abtrennungseinheit 64 geführt. Dort wird das Absorptionsmittel 50 von dem Kohlenstoffdioxid 48 getrennt. Das regenerierte Absorptionsmittel 50 kann dann zurück in die Absorptionseinheit 1 geführt werden. Das Kohlenstoffdioxid kann dann in einen Kohlenstoffdioxid-Elektrolyseur 70 geführt werden. Für den Fall, dass das Kohlenstoffdioxid mittels Elektrodialyse abgetrennt wird, ist es vorteilhaft als Lauge Natriumhydroxid NaOH oder Kaliumhydroxid KOH einzusetzen. Diese Laugen schonen die eingesetzten Membranen und sorgen so für einen geringen Wartungsaufwand der Elektrodialyse 61.

### Bezugszeichenliste

- 1: Absorbereinheit
- 2: Zuluftleitung
- 3: erstes Gebläse
- 5: unbeladenes Absorptionsmittel
- 6: Abluftleitung
- 7: Schüttung
- 8: beladenes Absorptionsmittel
- 9: Vorratsbehälter
- 10: erste Pumpe
- 20: Wassergewinnungseinheit
- 21: zweite Pumpe
- 22: Verdunstereinheit
- 23: zweites Gebläse
- 24: dritte Pumpe
- 25: erste Heizvorrichtung
- 26: Kondensator
- 27: vierte Pumpe
- 28: Kühleinheit
- 29: Wasser
- 30: teilregeneriertes Absorptionsmittel
- 40: erste Kohlenstoffdioxidgewinnungseinheit
- 41: fünfte Pumpe
- 42: Kristallisationseinheit
- 43: zweite Heizvorrichtung
- 44: sechste Pumpe
- 45: Rückführleitung
- 46: Carbonat
- 47: Kalziniereinheit
- 48: Kohlenstoffdioxid
- 49: basischer Rückstand
- 50: regeneriertes Absorptionsmittel
- 60: zweite Kohlenstoffdioxidgewinnungseinheit
- 61: Elektrodialyseeinheit
- 62: Kationen selektive Membran
- 63: bipolare Membran
- 64: Abtrennungseinheit
- 65: erste Kammer
- 66: zweite Kammer
- 70: Kohlenstoffdioxid-Elektrolyseur
- 71: elektrische Energie
- 72: Luft
- 73: Wertstoff
- 74: Trägergas
- 75: Wasserelektrolyseur
- 76: Wasserstoff
- 77: Sauerstoff
- 100: Gewinnungseinheit

## Patentansprüche

1. Absorptionsmittel (5) zum Gewinnen von Wasser (29) und Kohlenstoffdioxid (48) aus Luft, wobei das Absorptionsmittel (5) zu wenigstens einem Massenanteil von 20 % Salze zum Erniedrigen des Dampfdrucks umfasst, wobei der Kationenstoffmengenanteil der Salze zu wenigstens 90 % Alkali- und/oder Erdalkalimetallionen umfasst und der Anionenstoffmengenanteil der Salze zu wenigstens 80 % Halogeniden umfasst, wobei ein pH-Wert des Absorptionsmittels wenigstens 10,2 beträgt.

2. Absorptionsmittel (5) nach Anspruch 1, wobei das Absorptionsmittel (5) einen Dampfdruck aufweist, der bei einer Temperatur in einem Temperaturbereich von 0 °C bis 60 °C weniger als die Hälfte des Dampfdrucks von Wasser bei der derselben Temperatur beträgt.

3. Absorptionsmittel (5) nach einem der vorhergehenden Ansprüche, wobei der pH-Wert des Absorptionsmittels (5) wenigstens 11 beträgt.

4. Absorptionsmittel (5) nach einem der vorhergehenden Ansprüche, wobei der Kationenstoffmengenanteil im Absorptionsmittel (5) wenigstens 50 % Lithiumkationen umfasst.

5. Absorptionsmittel (5) nach einem der vorhergehenden Ansprüche, wobei der Anionenstoffmengenanteil im Absorptionsmittel (5) Chloridionen und/oder Bromidionen aufweist.

6. Absorptionsmittel (5) nach einem der vorhergehenden Ansprüche, wobei das Absorptionsmittel (5) Hydroxid, Hydrogencarbonat und/oder Carbonat in einem Stoffmengenanteil von 0,5 % bis 20 % aufweist.

7. Vorrichtung zum Gewinnen von Kohlenstoffdioxid (48) und Wasser (29) aus Luft, umfassend:
- eine Absorbereinheit (1) mit einem Absorptionsmittel (5), wobei das Absorptionsmittel (5) zu wenigstens einem Massenanteil von 20 % Salze umfasst, wobei der Kationenstoffmengenanteil der Salze zu wenigstens 90 % Alkali- und/oder Erdalkalimetallionen umfasst und der Anionenstoffmengenanteil der Salze zu wenigstens 80 % Halogeniden umfasst, wobei ein pH-Wert des Absorptionsmittels (5) wenigstens 10,2 beträgt,
- eine erste Abtrennvorrichtung (20) zum Gewinnen von Wasser (29) aus dem Absorptionsmittel (8),
- eine zweite Abtrennvorrichtung (40, 60) zum Gewinnen von Kohlenstoffdioxid (48) aus dem Absorptionsmittel (8).

8. Verfahren zum Gewinnen von Wasser (29) und Kohlenstoffdioxid (48) aus Luft mit folgenden Schritten:
- Bereitstellen einer Absorbereinheit (1) mit einem Absorptionsmittel (5), wobei das Absorptionsmittel (5) einen Massenanteil von wenigstens 20 % Salze umfasst, wobei der Kationenstoffmengenanteil der Salze wenigstens 90 % Alkali- und/oder Erdalkalimetallionen umfasst und der Anionenstoffmengenanteil der Salze wenigstens 80 % Halogeniden umfasst, wobei ein pH-Wert des Absorptionsmittels (5) wenigstens 10,2 beträgt,
- Führen von Luft in die Absorbereinheit (1) in das Absorptionsmittel (5),
- Absorbieren von Kohlenstoffdioxid (48) und Wasser (29) aus der Luft in das Absorptionsmittel (5),
- Führen des beladenen Absorptionsmittels (8) in eine erste Abtrennvorrichtung (20), wobei in der ersten Abtrennvorrichtung (20) Wasser (29) aus dem Absorptionsmittel (8) gewonnen wird,
- Führen des beladenen Absorptionsmittels (8) in eine zweite Abtrennvorrichtung (40, 60), wobei in der zweiten Abtrennvorrichtung (40, 60) Kohlenstoffdioxid (48) aus dem Absorptionsmittel (8) gewonnen wird,
- wenigstens teilweises Rückführen des regenerierten Absorptionsmittels (50) in die Absorbereinheit (1).

9. Verfahren nach Anspruch 8, wobei das Kohlenstoffdioxid (48) und/oder das Wasser (29) in einen Kohlenstoffdioxid-Elektrolyseur (70) und/oder einen Wasser-Elektrolyseur (75) geführt wird.

10. Verfahren nach Anspruch 8 oder 9, wobei die Luft mittels eines Gebläses (3) in die Absorbereinheit (1) geführt wird.

11. Verfahren nach Anspruch 8 bis 10, wobei die Druckerhöhung des Gebläses (3) weniger als 50 mbar beträgt.

12. Verfahren nach einem der Ansprüche 8 bis 11, wobei ein Druckabfall aufgrund des Gebläses (3) weniger als 10 mbar beträgt.

13. Verfahren nach einem der Ansprüche 8 bis 12, wobei als eine erste Abtrennvorrichtung eine Verdunstungseinheit (20) oder eine Membraneinheit verwendet wird.

14. Verfahren nach einem der Ansprüche 8 bis 13, wobei als eine zweite Abtrennvorrichtung eine Membraneinheit (60) eingesetzt wird.

15. Verfahren nach einem der Ansprüche 8 bis 13, wobei in der zweiten Abtrennvorrichtung (40) ein Ausfällen von Carbonat und eine thermische Zersetzung des Carbonats zum Abtrennen des Kohlenstoffdioxid (48) erfolgt.
